# EUROPÄISCHE PATENTSCHRIFT

(11) **EP 3 358 701 B1**
(45) Veröffentlichungstag und Bekanntmachung des Hinweises auf die Patenterteilung: **18.12.2019**
(21) Anmeldenummer: 18153126.0
(22) Anmeldetag: 24.01.2018
(51) Int. Cl.: H02J 7/00

(54) **LADESCHALTUNG MIT GLEICHSPANNUNGSWANDLER UND LADEVERFAHREN FÜR EIN ELEKTRISCHES ENERGIESPEICHERSYSTEM**
CHARGING CIRCUIT WITH A DC CONVERTER AND CHARGING METHOD FOR AN ELECTRICAL ENERGY STORAGE SYSTEM
CIRCUIT DE CHARGE POURVU DE CONVERTISSEUR CONTINU-CONTINU ET PROCÉDÉ DE CHARGE POUR UN SYSTÈME D'ACCUMULATION D'ÉNERGIE ÉLECTRIQUE

(30) Priorität: 01.02.2017 DE 102017201604
(43) Veröffentlichungstag der Anmeldung: 08.08.2018
(73) Patentinhaber: Robert Bosch GmbH, 70442 Stuttgart (DE)
(72) Erfinder: Krieg, Berengar, 70839 Gerlingen (DE)

(56) Entgegenhaltungen:
- JP-A- H11 299 112
- US-A1- 2013 175 865

## Beschreibung

Die vorliegende Offenbarung geht aus von einer Ladeschaltung mit einem Gleichspannungswandler für ein elektrisches Energiespeichersystem, einem Ladeverfahren zum Ladebetrieb eines elektrischen Energiespeichersystems sowie einem elektrischen Energiespeichersystem gemäß dem Oberbegriff der unabhängigen Patentansprüche.

### Stand der Technik

Das Laden von elektrisch angetriebenen Fahrzeugen, insbesondere von Fahrzeugen mit Batterie als Hauptenergiequelle, ist heutzutage Gegenstand intensiver Forschung und Entwicklung. Zum einen liegt dies daran, dass gegenwärtige Ladezeiten für eine vollständige Batterieladung noch sehr lang sind, und zum anderen wird die Kapazität zukünftiger Speicher eher noch zunehmen, sodass in naher Zukunft im Fahrzeug verbaute elektrische Energiespeichersysteme mit Kapazitäten von mehr als 50 kWh zum Einsatz kommen werden. Gleichzeitig sind für eine breitere Akzeptanz dieser Fahrzeuge kürzere Ladezeiten, möglichst vergleichbar mit den Ladezeiten beim Tankvorgang von Fahrzeugen mit Verbrennungsmotor, wünschenswert.

Bedingt durch technische Standards, verfügbare Bauteile und Technologien sowie Wirkungsgradanforderungen ist eine normale Betriebsspannung des Fahrzeugantriebsstranges derzeit beschränkt auf Werte von typischerweise 300 V bis 450 V bei rein elektrisch angetriebenen Fahrzeugen. Standardkonforme Ladestecker sind typischerweise für Nennströme bis 200 A zertifiziert, wobei die Ladespannung für Gleichspannungsladen typischerweise zwischen 200 V bis 850 V liegen kann. Durch Kommunikation zwischen Energiespeichersystem und Ladeeinrichtung kann ladeeinrichtungsseitig im Rahmen gewisser Grenzen eine stufenlose Regelung von Ladespannung und Ladestrom erfolgen.

Heutzutage verfügbare elektrische Energiespeichersysteme, insbesondere Batteriesysteme, bieten jedoch keine Möglichkeit, die Spannung beim Laden zu erhöhen, da ihre Verschaltung, beispielsweise in Reihen- oder Parallelschaltung, fest verdrahtet ist, und gleichzeitig die antriebsseitig vorhandenen Komponenten, beispielsweise den Inverter, auf dem normalen Betriebsspannungsniveau weiterzutreiben.

In der Druckschrift JP 2012-065435 wird ein Gleichspannungswandler beschrieben, der mittels mehrerer Kondensatoren eine gegenüber den angeschlossenen Batterien erhöhte Ausgangsspannung ausgeben kann.

Die Druckschrift US 2013/0175865 A1 beschreibt Lade-/Entladesystem für Batterien, wobei ein angeschlossener elektrischer Verbraucher einer erhöhten Spannung ausgesetzt ist.

Aus der Druckschrift US 2013/0106357 A1 ist ein Batteriepack für ein elektrisches Fahrzeug bekannt, bei dem einzelne Batterie des Batteriepacks über Halbleiterschalter ansteuerbar sind.

Die Druckschrift US 2005/0052154 A1 beschreibt ein medizinisches Gerät mit einer Schalteranordnung, dessen Entladespannung höher liegt als seine Ladespannung.

In der Druckschrift US 2007/0139012 A1 werden ein Schnellladesystem und eine Schnelllademethode beschrieben.

### Offenbarung der Erfindung

### Vorteile der Erfindung

Offenbart wird eine Ladeschaltung für ein elektrisches Energiespeichersystem, ein Ladeverfahren zum Ladebetrieb eines elektrischen Energiespeichersystems sowie ein elektrisches Energiespeichersystem mit den kennzeichnenden Merkmalen der unabhängigen Patentansprüche bereitgestellt.

Dabei umfasst die Ladeschaltung für ein elektrisches Energiespeichersystem, welches n elektrische Energiespeichereinheiten mit jeweils einem ersten Pol und einem zweiten Pol aufweist, wobei n > 1 gilt, mindestens einen ersten Eingang und einen zweiten Eingang zur elektrischen Verbindung mit einer Energiequelle, mindestens einen ersten Ausgang und einen zweiten Ausgang zur elektrischen Verbindung mit einer elektrischen Komponente, mindestens n erste Polanschlüsse und n zweite Polanschlüsse, wobei ein i-ter erster Polanschluss mit dem ersten Pol der i-ten elektrischen Energiespeichereinheit und ein i-ter zweiter Polanschluss mit dem zweiten Pol der i-ten elektrischen Energiespeichereinheit elektrisch leitend verbindbar sind. Darüber hinaus weist die Ladeschaltung mindestens n erste Schalter auf, wobei ein erster Anschluss des i-ten ersten Schalters mit dem i-ten ersten Polanschluss der i-ten elektrischen Energiespeichereinheit elektrisch leitend verbunden ist. Die Ladeschaltung umfasst weiterhin mindestens n zweite Schalter, wobei ein erster Anschluss des i-ten zweiten Schalters mit dem i-ten zweiten Polanschluss der i-ten elektrischen Energiespeichereinheit elektrisch leitend verbunden ist, so-wie mindestens n-1 dritte Schalter, wobei ein erster Anschluss des k-ten dritten Schalters mit dem ersten Polanschluss der k-ten elektrischen Energiespeicher-einheit und ein zweiter Anschluss des k-ten dritten Schalter mit dem zweiten Polanschluss der k+1-ten elektrischen Energiespeichereinheit elektrisch leitend verbunden sind, wobei n > 1 und i <= n sowie k < n natürliche Zahlen sind. Erfindungsgemäß weist die Ladeschaltung einen Gleichspannungswandler auf und sind ferner der erste Ausgang mit dem zweiten Anschluss des ersten Schalters elektrisch leitend verbunden, der zweite Ausgang mit dem zweiten Anschluss des ersten zweiten Schalters elektrisch leitend verbunden, der erste Eingang mit dem ersten Anschluss des n-ten ersten Schalters elektrisch leitend verbunden sowie der zweite Eingang mit dem ersten Anschluss des ersten zweiten Schalters elektrisch leitend verbunden. Erfindungsgemäß sind ferner die ersten Schalter, die zweiten Schalter und die dritten Schalter derart geschaltet, dass im Ladebetrieb mittels einer an den ersten Eingang und den zweiten Eingang an-geschlossenen Energiequelle ein mindestens doppelt so hohes Spannungsniveau zwischen dem ersten Eingang und dem zweiten Eingang anliegt im Vergleich mit dem Spannungsniveau zwischen dem ersten Ausgang und dem zweiten Ausgang. Weiterhin ist ein erster elektrischer Eingang des Gleichspannungswandlers mit dem ersten Eingang der Ladeschaltung elektrisch leitend verbunden sowie ein zweiter Eingang des Gleichspannungswandlers mit dem zweiten Eingang der Ladeschaltung elektrisch leitend verbunden. Zudem ist ein erster elektrischer Ausgang des Gleichspannungswandlers mit dem ersten Ausgang der Ladeschaltung elektrisch leitend verbunden und ein zweiter elektrischer Ausgang des Gleichspannungswandlers mit dem zweiten Ausgang der Ladeschaltung elektrisch leitend verbunden. Diese Art der Verschaltung hat den Vorteil, dass durch das erhöhte Spannungsniveau im Ladebetrieb die Ladeleistung mindestens verdoppelt werden kann, was in wesentlich verkürzten Ladezeiten resultiert. Gleichzeitig können ausgangsseitig vorhandene elektrische Komponenten, beispielsweise der Inverter, auf dem normalen Betriebsspannungsniveau durch den Gleichspannungswandler weiterbetrieben werden, sodass für diese Komponenten keine neue Entwicklung bzw. der Einsatz neuer Technologien erfolgen muss. Zudem erfolgt durch die Nutzung des Gleichspannungswandlers keine unterschiedliche Belastung der Energiespeichereinheiten zur Energieversorgung der elektrischen Komponenten, alle Energiespeichereinheiten werden gleichmäßig geladen. Im Rahmen von Schwankungen von Kenngrößen der elektrischen Energiespeichereinheit, beispielsweise Innenwiderstand und Kapazität, kann das erhöhte Spannungsniveau im Ladebetrieb leicht variieren.

Weitere vorteilhafte Ausführungsformen der vorliegenden Erfindung sind Gegenstand der Unteransprüche.

Vorteilhafterweise ist die Energiequelle eine Gleichstrom-Energiequelle, was deren Anschluss an den ersten Eingang und den zweiten Eingang der Ladeschaltung ermöglicht.

Vorteilhafterweise sind die Schalter beispielsweise als Halbleiterschalter, beispielsweise als MOSFETs oder IGBTs, aber auch als elektromechanische Relais oder Schütze ausgeführt, wobei ersteres Schaltverluste verringert und letzteres eine bewährte, zuverlässige Technologie darstellt.

Zweckmäßigerweise ist die Ladeschaltung so ausgestaltet, dass auch bei geöffnetem ersten ersten Schalter und/oder geöffnetem ersten zweiten Schalter der erste elektrische Ausgang des Gleichspannungswandlers mit dem ersten Ausgang der Ladeschaltung elektrisch leitend verbunden ist und der zweite elektrische Ausgang des Gleichspannungswandlers mit dem zweiten Ausgang der Ladeschaltung elektrisch leitend verbunden ist. Somit ist sichergestellt, dass die an den Ausgang angeschlossenen elektrischen Komponenten ausschließlich durch den Gleichspannungswandler mit elektrischer Energie versorgt werden und somit die elektrischen Energiespeichereinheiten nicht entladen werden. Dabei kann der Gleichspannungswandler beispielsweise auch innerhalb eines bereits in einem Fahrzeug vorhandenen Onboard-Ladegerät integriert sein beziehungsweise als eigenständige Komponente vorhanden sein.

Zweckmäßigerweise ist das elektrische Spannungsniveau zwischen dem ersten elektrischen Ausgang des Gleichspannungswandler und dem zweiten elektrischen Ausgang des Gleichspannungswandler im Wesentlichen gleich dem Spannungsniveau zwischen dem ersten Ausgang der Ladeschaltung und dem zweiten Ausgang der Ladeschaltung und weiterhin gleicht das Spannungsniveau zwischen dem ersten elektrischen Eingang des Gleichspannungswandlers und dem zweiten elektrischen Eingang des Gleichspannungswandlers im Wesentlichen dem Spannungsniveau zwischen dem ersten Eingang der Ladeschaltung und dem zweiten Eingang der Ladeschaltung. Somit ist sichergestellt, dass der Gleichspannungswandler die an die Ausgänge der Ladeschaltung angeschlossenen elektrischen Komponenten mit elektrischer Energie versorgen kann, wobei er gleichzeitig von der Energiequelle mit elektrischer Energie versorgt werden kann.

Zweckmäßigerweise ist die Ladeschaltung so ausgestaltet, dass der zweite Anschluss des i-ten zweiten Schalters mit dem zweiten Ausgang elektrisch leitend verbunden ist und der zweite Anschluss des i-ten ersten Schalters mit dem ersten Ausgang elektrisch leitend verbunden ist. Dadurch kann eine beliebige Zahl an elektrischen Energiespeichereinheiten zueinander parallel geschaltet werden. Somit steht einer am ersten Ausgang und am zweiten Ausgang angeschlossenen elektrischen Komponente eine größere Energiespeicherkapazität zur Verfügung.

Vorteilhafterweise umfasst die Ladeschaltung mindestens n-1 vierte Schalter, wobei in die elektrische Verbindung zwischen dem zweiten Anschluss des k-ten dritten Schalters mit dem zweiten Polanschluss der k+1-ten elektrischen Energiespeichereinheit der k-te vierte Schalter eingefügt ist und der zweite Anschluss des k-ten dritten Schalters mit einem ersten Anschluss des k-ten vierten Schalters elektrisch leitend verbunden ist sowie ein zweiter Anschluss des k-ten vierten Schalters mit dem zweiten Polanschluss der k+1-ten elektrischen Energiespeichereinheit elektrisch leitend verbunden ist. Dadurch kann bei getrennt verbauten, gegebenenfalls verschlossenen elektrischen Energiespeichereinheiten, beispiels-weise zwei Batteriemodulen, auch die die Reihenschaltung herstellende elektrische Leitung allpolig vom Potential der elektrischen Energiespeichereinheiten getrennt werden, was eine Anforderung im Automobilbereich ist.

Vorteilhafterweise umfasst die Ladeschaltung für jede zweielementige Teilmenge der n-elementigen Menge der elektrischen Energiespeichereinheiten, die nicht aus benachbarten Elemente besteht, mindestens einen fünften Schalter. Dabei sind ein erster Anschluss des jeweiligen fünften Schalters mit dem ersten Polanschluss der jeweiligen ersten elektrischen Energiespeichereinheit und ein zweiter Anschluss des jeweiligen fünften Schalters mit dem zweiten Polanschluss der jeweiligen zweiten elektrischen Energiespeichereinheit elektrisch leitend verbunden. Dadurch können auch nicht direkt benachbarte elektrische Energiespeichereinheiten miteinander in Reihe verschaltet werden, womit flexiblere Lade-möglichkeiten erreicht werden. Beispielsweise können bei drei elektrischen Energiespeichereinheiten 1, 2 und 3 die Einheiten 1 und 3 in Reihe geschaltet werden, um mit höherer Ladespannung geladen zu werden.

Zweckmäßigerweise umfasst die Ladeschaltung für jede zweielementige Teilmenge der n-elementigen Menge der elektrischen Energiespeichereinheiten, die nicht aus benachbarten Elemente besteht, mindestens den fünften Schalter und mindestens einen sechsten Schalter. Dabei sind der erste Anschluss des jeweiligen fünften Schalters mit dem ersten Polanschluss der jeweiligen ersten elektrischen Energiespeichereinheit und der zweite Anschluss des jeweiligen fünften Schalters mit einem ersten Anschluss des jeweiligen sechsten Schalters elektrisch leitend verbunden. Darüber hinaus ist ein zweiter Anschluss des jeweiligen sechsten Schalters mit dem zweiten Polanschluss der jeweiligen zweiten elektrischen Energiespeichereinheit elektrisch leitend verbunden. Dadurch können auch nicht direkt benachbarte elektrische Energiespeichereinheiten miteinander in Reihe verschaltet werden, womit flexiblere Lademöglichkeiten erreicht werden und gleichzeitig erhöhte Sicherheitsanforderungen, beispielsweise eine allpolige Potentialtrennung der Verbindungsleitungen, was bei getrennten Gehäusen gefordert sein kann, erreicht werden.

Gemäß einer weiteren Ausgestaltung der Ladeschaltung ist ein induktives Bauteil, beispielsweise eine Spule, mit mindestens einem ersten Schalter und/oder mindestens einem zweiten Schalter elektrisch leitend in Reihe verbunden. Dadurch kann ein möglicher Ausgleichsstrom beim Herstellen einer Parallelschaltung zwischen elektrischen Energiespeichereinheiten besser begrenzt werden.

Weiterhin ist Gegenstand der Erfindung ein Ladeverfahren zum Ladebetrieb eines elektrischen Energiespeichersystems, wobei das elektrische Energiespeichersystem mindestens n elektrische Energiespeichereinheiten und mindestens eine erfindungsgemäße Ladeschaltung aufweist, wobei n > 1 ist. Erfindungsgemäß umfasst das Verfahren in einem ersten Schritt ein Auswählen von mindestens zwei der n elektrischen Energiespeichereinheiten, welche im Ladebetrieb mittels einer an den ersten Eingang und den zweiten Eingang angeschlossenen Energiequelle geladen werden sollen, und ein Entscheiden, ob eine an den ersten Ausgang und den zweiten Ausgang angeschlossene elektrische Komponente während des Ladens mit elektrischer Energie durch den Gleichspannungswandler versorgt werden soll. Anschließend erfolgt ein Öffnen der ersten Schalter und der zweiten Schalter der zu ladenden elektrischen Energiespeichereinheiten. In einem dritten Schritt erfolgt ein Schließen derjenigen dritten Schalter, die die zu ladenden elektrischen Energiespeichereinheiten in Reihe verbinden. In einem vierten Schritt wird die Energiezufuhr gestartet mittels einer an den ersten Eingang und den zweiten Eingang angeschlossenen Energiequelle, wobei bei einer positiven Entscheidung die an den ersten Ausgang und den zweiten Ausgang angeschlossene elektrische Komponente während des Ladens durch den Gleichspannungswandler mit elektrischer Energie versorgt wird. Durch diese Verfahrensschritte kann die Ladespannung erhöht und gleichzeitig die elektrische Komponente weiterhin mit Energie auf ihrem normalen Betriebsspannungsniveau versorgt werden. Eine schaltungstechnische Anpassung von elektrischen Komponenten kann also vermieden werden.

Weiterhin ist Gegenstand der Offenbarung ein elektrisches Energiespeichersystem mit mindestens zwei elektrischen Energiespeichereinheiten, wobei das elektrische Energiespeichersystem eine der oben offenbarten Ladeschaltungen umfasst. Somit kann insbesondere auf Systemebene eine deutliche Reduktion der Ladezeit erreicht werden bei gleichzeitiger Energieversorgung von elektrischen Komponenten über den Gleichspannungswandler.

Weiterhin ist Gegenstand der Offenbarung eine Verwendung einer der offenbarten Ladeschaltungen in elektrisch angetriebenen Fahrzeugen einschließlich Hybridfahrzeugen, in stationären Energiespeicheranlagen sowie in elektrisch betriebenen Handwerkzeugen. Somit wird auch im Bereich der Handwerkzeuge, beispielsweise für eine Akkubohrmaschine, die Möglichkeit eröffnet, die Ladezeit signifikant zu reduzieren, was beispielsweise die Notwendigkeit eines sehr großen Energiespeichers beziehungsweise mehrerer Ersatzenergiespeicher obsolet macht.

Unter einer elektrischen Energiespeichereinheit kann insbesondere eine elektrochemische Batteriezelle und/oder ein Batteriemodul mit mindestens einer elektrochemischen Batteriezelle und/oder ein Batteriepack mit mindestens einem Batteriemodul verstanden werden. Zum Beispiel kann die elektrische Energiespeichereinheit eine lithiumbasierte Batteriezelle oder ein lithiumbasiertes Batteriemodul oder ein lithiumbasiertes Batteriepack sein. Insbesondere kann die elektrische Energiespeichereinheit eine Lithium-Ionen-Batteriezelle oder ein Lithium-Ionen-Batteriemodul oder ein Lithium-Ionen-Batteriepack sein. Weiterhin kann die Batteriezelle vom Typ Lithium-Polymer-Akkumulator, Nickel-Metallhydrid-Akkumulator, Blei-Säure-Akkumulator, Lithium-Luft-Akkumulator oder Lithium-Schwefel-Akkumulator beziehungsweise ganz allgemein ein Akkumulator beliebiger elektrochemischer Zusammensetzung sein. Auch ein Kondensator ist als elektrische Energiespeichereinheit möglich.

### Kurze Beschreibung der Zeichnungen

Vorteilhafte Ausführungsformen der Erfindung sind in den Figuren dargestellt und in der nachfolgenden Beschreibung näher ausgeführt.

Es zeigen:
- Figur 1: eine schematische Darstellung der offenbarten Ladeschaltung gemäß einer ersten Ausführungsform;
- Figur 2: eine schematische Darstellung der offenbarten Ladeschaltung gemäß einer zweiten Ausführungsform;
- Figur 3: eine schematische Darstellung der offenbarten Ladeschaltung gemäß einer dritten Ausführungsform;
- Figur 4: eine schematische Darstellung der offenbarten Ladeschaltung gemäß einer vierten Ausführungsform; und
- Figur 5: ein Flussdiagramm des beanspruchten Verfahrens gemäß einer ersten Ausführungsform.

### Ausführungsformen der Erfindung

Gleiche Bezugszeichen bezeichnen in allen Figuren gleiche Vorrichtungskomponenten oder gleiche Verfahrensschritte.

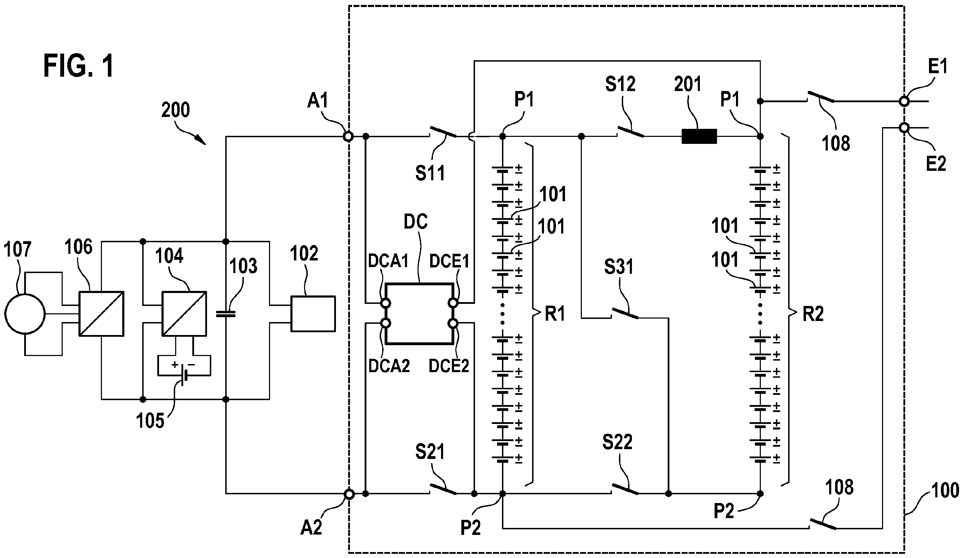

Figur 1 zeigt eine erfindungsgemäße Ladeschaltung 200 für ein Fahrzeug mit zwei elektrischen Energiespeichereinheiten R1 und R2 gemäß einer ersten Ausführungsform. Im linken Bereich sind dabei elektrische Komponenten abgebildet, welche bei Einsatz der erfindungsgemäßen Ladeschaltung 200 unverändert bleiben können. Insbesondere handelt es sich dabei um einen Elektromotor 107, einen Wechselrichter 106, einen DC/DC-Wandler 104 für das 12-V-Bordnetz und die Bordnetzbatterie 105, einen Zwischenkreis mit Zwischenkreiskapazität 103 und einen Klimakompressor 102. Alle elektrischen Komponenten, die über den ersten Ausgang A1 und den zweiten Ausgang A2 an die Ladeschaltung 200 angeschlossen sind, können demzufolge unverändert weiter genutzt werden. Die elektrischen Energiespeichereinheiten R1 und R2 sind innerhalb der Batterie 100 über die zwei ersten Polanschlüsse P1 und die zwei zweiten Polanschlüsse P2 an die erfindungsgemäße Ladeschaltung 200 angeschlossen. Die elektrischen Energiespeichereinheiten R1 und R2 bestehen dabei aus mehreren einzelnen Batteriezellen 101. Ein erster erster Schalter S11 und ein erster zweiter Schalter S21 dienen insbesondere dazu, eine elektrische Verbindung der ersten elektrischen Energiespeichereinheit R1 mit dem ersten Ausgang A1 beziehungsweise dem zweiten Ausgang A2 zu ermöglichen. Weiterhin dienen ein zweiter erster Schalter S12 und ein zweiter zweiter Schalter S22 insbesondere dazu, eine elektrische Verbindung der zweiten elektrischen Energiespeichereinheit R2 mit dem ersten Ausgang A1 beziehungsweise dem zweiten Ausgang A2 zu ermöglichen. Weiterhin dient ein erster dritter Schalter S31 dazu, im Ladebetrieb die elektrischen Energiespeichereinheiten R1 und R2 in Reihe miteinander zu verschalten. Eine Energiezufuhr erfolgt dabei durch eine an den ersten Eingang E1 und den zweiten Eingang E2 angeschlossene Energiequelle. Über zwei Schalter 108 können der erste Eingang E1 und der zweite Eingang E2 von den Energiespeichereinheiten abgetrennt werden. Somit wird sichergestellt, dass die Eingänge spannungsfrei geschaltet werden können, wenn nicht geladen wird. Weiterhin weist die Ladeschaltung 200 einen Gleichspannungswandler DC mit einem ersten Eingang DCE1 und einem zweiten Eingang DCE2 sowie einem ersten Ausgang DCA1 und einem zweiten Ausgang DCA2 auf. Der erste Eingang DCE1 des Gleichspannungswandlers DC ist mit dem ersten Eingang E1 der Ladeschaltung 200 über den ersten Schalter 108 verbunden. Der zweite Eingang DCE2 des Gleichspannungswandlers DC ist über den zweiten Schalter 108 mit dem zweiten Eingang E2 der Ladeschaltung 200 verbunden. Der erste Ausgang DCA1 des Gleichspannungswandlers DC ist mit dem ersten Ausgang A1 der Ladeschaltung 200 verbunden. Der zweite Ausgang DCA2 des Gleichspannungswandlers DC ist mit dem zweiten Ausgang A2 der Ladeschaltung 200 verbunden. Im Ladebetrieb kann der Gleichspannungswandler DC somit die zwischen den Eingängen E1 und E2 anliegende Spannung auf eine für die vorgenannten elektrischen Komponenten geeignete Spannung wandeln und diese somit auch bei geöffneten Schaltern S11, S21 mit elektrischer Energie versorgen. Dies bedingt, dass die elektrischen Energiespeichereinheiten R1 und R 2 in gleichem Maße geladen werden. Eventuelle Ausgleichsvorgänge sind somit nicht notwendig.

Die Schalterstellungen der ersten Schalter S11 und S12, der zweiten Schalter S21 und S22 sowie des ersten dritten Schalters S31 und der Schalter 108 bei Reihenschaltung im Ladebetrieb sind in nachstehender Tabelle angegeben:

| | S11 | S12 | S21 | S22 | S31 | 108 |
|---|---|---|---|---|---|---|
| Schalterstellung im Ladebetrieb | geöffnet | geöffnet | geöffnet | geöffnet | geschlossen | geschlossen |

Somit liegt im Ladebetrieb zwischen dem ersten Eingang E1 und dem zweiten Eingang E2 die doppelte Spannung an, es kann demzufolge bei gleichem Strom die doppelte Energiemenge übertragen werden. Dabei ist bei Herstellung der Reihenschaltung darauf zu achten, dass zuerst der zweite erste Schalter S12 und der zweite zweite Schalter S22 geöffnet werden, bevor der erste dritte Schalter S31 geschlossen wird, um einen Kurzschluss zu vermeiden. Dies kann bei mechanischen Schalteinrichtung, beispielsweise Schützen, durch eine gemeinsame mechanische Kopplung des zweiten ersten Schalters S12, des zweiten zweiten Schalters S22 und des ersten dritten Schalters S31 erfolgen mit entsprechendem Nacheilen des Öffnens des ersten dritten Schalters S31 oder bei elektronischen Schalteinrichtungen, beispielsweise MOSFETs oder IGBTs, sowie bei nicht gekoppelten elektromechanischen Schalteinrichtungen durch eine entsprechende Veto-Beschaltung der Ansteuerung beziehungsweise durch entsprechend abgesicherte Softwarefunktionen in einer die Schalteinrichtung kontrollierenden, hier nicht dargestellten elektronischen Einheit. Der erste erste Schalter S11 und der erste zweite Schalter S21 befinden sich zur gleichen Ladung der elektrischen Energiespeichereinheiten R1, R2 in geöffnetem Zustand, wobei die Versorgung der angeschlossenen elektrischen Komponenten über den Gleichspannungswandler DC erfolgt. Die Versorgung der angeschlossenen elektrischen Komponenten 102 bis 107 ist beispielsweise sinnvoll, um während des Ladevorgangs beispielsweise das Kühlsystem der Batterie 100 und angeschlossene 12V-Verbraucher zu versorgen. Wenn der Ladebetrieb beendet wurde und Energie an über den ersten Ausgang A1 und den zweiten Ausgang A2 angeschlossene elektrische Komponenten abgegeben werden soll, ändert sich die Schalterstellung der genannten Schalter wie folgt zu:

| | S11 | S12 | S21 | S22 | S31 | 108 |
|---|---|---|---|---|---|---|
| Schalterstellung im Nichtladebetrieb | geschlossen | geschlossen | geschlossen | geschlossen | geöffnet | geöffnet |

Dabei ist bei Umschaltung von Reihenschaltung der elektrischen Energiespeichereinheiten R1 und R2 auf Parallelschaltung von R1 und R2 darauf zu achten, dass zuerst der erste dritte Schalter S31 geöffnet wird, bevor der zweite erste Schalter S12 und der zweite zweite Schalter S22 umgeschaltet werden, um einen Kurzschluss zu vermeiden. Dies kann mit den vorgenannten Mitteln, beispielsweise einer mechanischen Kopplung, erreicht werden. Auch die Versorgung der elektrischen Komponenten durch den Gleichspannungswandler DC wird dann beendet, da die elektrischen Komponenten wieder durch die elektrischen Energiespeichereinheiten R1 und R2 mit elektrischer Energie versorgt werden. Um beim Herstellen der Parallelschaltung zwischen den beiden elektrischen Energiespeichereinheiten einen möglichen Ausgleichsstrom zu begrenzen, ist in die Ladeschaltung 200 ein zusätzliches, hauptsächlich induktiv wirkendes Bauteil 201 integriert. Weiterhin kann zur Ausgleichsstrombegrenzung der zweite erste Schalter S12 für eine gewisse Zeit, beispielsweise einige Minuten, getaktet betrieben werden. Zwar wird der Ausgleichsstrom durch die gleiche Ladung relativ gering ausfallen, er kann aber aufgrund von Kapazitätsabweichungen in den Batteriezellen 101 doch auftreten.

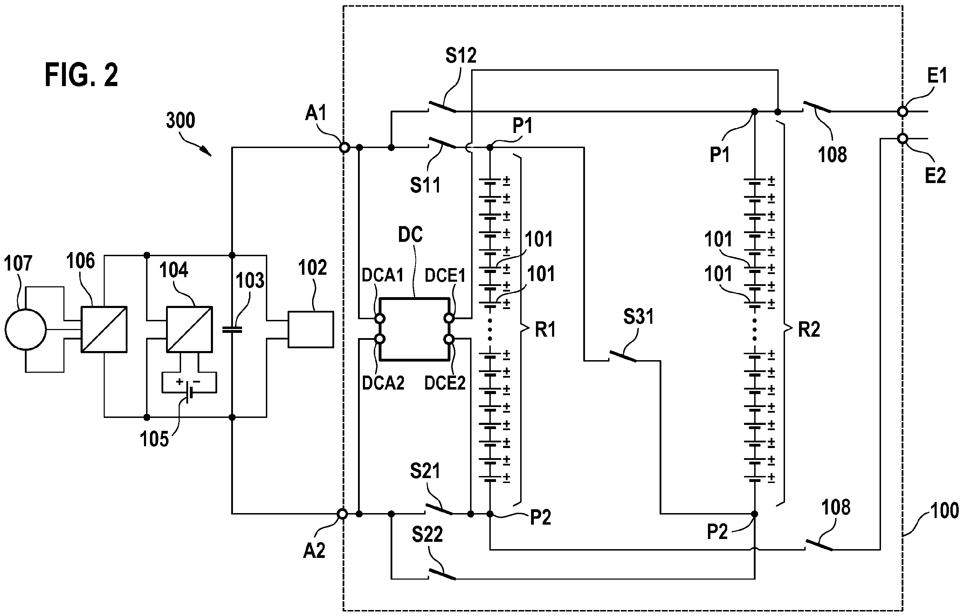

Figur 2 zeigt eine erfindungsgemäße Ladeschaltung 300 für ein Fahrzeug mit zwei elektrischen Energiespeichereinheiten R1 und R2 gemäß einer zweiten Ausführungsform. Hierbei können über den ersten Ausgang A1 und den zweiten Ausgang A2 angeschlossene elektrische Komponenten während beziehungsweise nach dem Ladevorgang sowohl durch die erste elektrische Energiespeichereinheit R1 als auch durch die zweite elektrische Energiespeichereinheit R2 versorgt werden. Dazu sind die ersten Schalter S11 und S12 jeweils mit ihren zweiten Anschlüssen mit dem ersten Ausgang A1 sowie die zweiten Schalter S21 und S22 jeweils mit ihren zweiten Anschlüssen mit dem zweiten Ausgang A2 elektrisch leitend verbunden. Dies ermöglicht ein abwechselndes Zu- beziehungsweise Abschalten der über die ersten und zweiten Ausgänge A1 und A2 angeschlossenen elektrischen Komponenten auf die erste elektrische Energiespeichereinheit R1 beziehungsweise die zweite elektrische Energiespeichereinheit R2. Weiterhin weist die Ladeschaltung 300 einen Gleichspannungswandler DC mit einem ersten Eingang DCE1 und einem zweiten Eingang DCE2 sowie einem ersten Ausgang DCA1 und einem zweiten Ausgang DCA2 auf. Der erste Eingang DCE1 des Gleichspannungswandlers DC ist mit dem ersten Eingang E1 der Ladeschaltung 300 über den ersten Schalter 108 verbunden. Der zweite Eingang DCE2 des Gleichspannungswandlers DC ist über den zweiten Schalter 108 mit dem zweiten Eingang E2 der Ladeschaltung 300 verbunden. Der erste Ausgang DCA1 des Gleichspannungswandlers DC ist mit dem ersten Ausgang A1 der Ladeschaltung 300 verbunden. Der zweite Ausgang DCA2 des Gleichspannungswandlers DC ist mit dem zweiten Ausgang A2 der Ladeschaltung 300 verbunden. Im Ladebetrieb kann der Gleichspannungswandler DC somit die zwischen den Eingängen E1 und E2 anliegende Spannung auf eine für die vorgenannten elektrischen Komponenten geeignete Spannung wandeln und diese somit auch bei geöffneten Schaltern S11, S21, S12, S22 mit elektrischer Energie versorgen. Dies bedingt, dass die elektrischen Energiespeichereinheiten R1 und R2 in gleichem Maße geladen werden. Eventuelle Ausgleichsvorgänge sind somit nicht notwendig. Die Schalter 108 dienen der elektrischen Trennung des ersten Eingangs E1 und des zweiten Eingangs E2 von spannungsführenden Komponenten, hier den elektrischen Energiespeichereinheiten R1 und R2. Somit ist sichergestellt, dass die Batterie 100 allseitig vom Netz getrennt werden kann. Sollte es dennoch aufgrund von Kapazitätsabweichungen innerhalb der elektrischen Energiespeichereinheiten R1 und R2 zu Abweichungen beim Ladezustand kommen, kann der Ladezustandsunterschied beispielsweise während des Ladevorgangs ausgeglichen werden kann, indem beispielsweise durch Schließen des ersten ersten Schalters S11 und des ersten zweiten Schalters S21 die elektrische Energiespeichereinheit R1 mit den Ausgängen DCA1, DCA2 des Gleichspannungswandlers DC verbunden wird und je nach Verbrauch der elektrischen Komponenten 102 bis 107 und der Regelung des Gleichspannungswandlers DC die elektrische Energiespeichereinheit R1 zusätzlich geladen oder entladen wird. Somit können Ausgleichsvorgänge während der Wiederherstellung der Parallelschaltung verhindert werden.

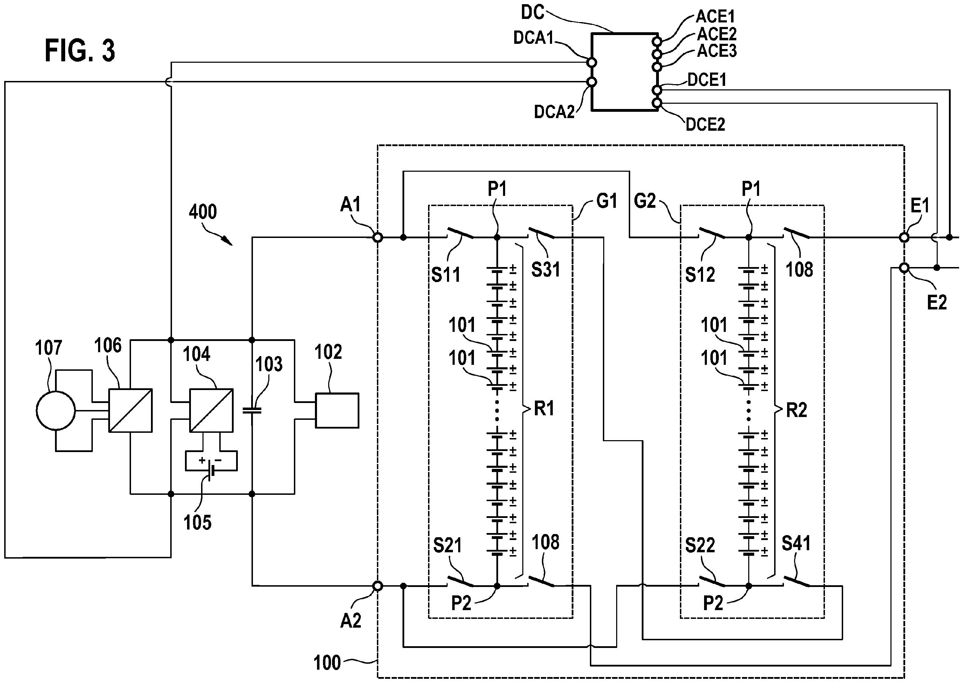

Figur 3 zeigt eine erfindungsgemäße Ladeschaltung 400 für ein Fahrzeug mit zwei elektrischen Energiespeichereinheiten R1 und R2 gemäß einer dritten Ausführungsform. Insbesondere ist durch einen ersten vierten Schalter S41 ein räumlich getrennter Aufbau der elektrischen Energiespeichereinheiten R1 und R2 möglich, der dennoch eine mögliche Sicherheitsanforderung nach allpoliger Trennung der hochspannungsführenden Komponenten, beispielsweise zum Berührschutz nach außen, erlaubt. Die elektrischen Energiespeichereinheiten R1 und R2 samt zugehöriger Schalter werden in separaten Gehäusen G1 beziehungsweise G2 verbaut, wodurch insbesondere Flexibilität bezüglich der Bauraumgestaltung gewonnen werden kann. Zum Laden beziehungsweise zum Starten des Ladebetriebs mit erhöhter Ladespannung ist zusätzlich zum ersten dritten Schalter S31 der erste vierte Schalter S41 zu schließen, sodass eine Reihenschaltung der elektrischen Energiespeichereinheiten R1 und R2 hergestellt wird. Bei Beendigung des Ladebetriebes ist somit zusätzlich zur Öffnung des ersten dritten Schalters S31 der erste vierte Schalter S41 zu öffnen. Zudem ist vorteilhaft, dass die in den separaten Gehäusen G1 und G2 befindlichen Komponenten jeweils gleich sind, das heißt, die Batterie 100 kann aus identischen Modulen beziehungsweise Teilsystemen aufgebaut werden, was Herstellkosten spart und einen möglichen Austausch bei Reparatur vereinfacht. Weiterhin weist die Ladeschaltung einen Gleichspannungswandler DC mit einem ersten Eingang DCE1 und einem zweiten Eingang DCE2 sowie einem ersten Ausgang DCA1 und einem zweiten Ausgang DCA2 auf. Der Gleichspannungswandler DC kann dabei beispielsweise in ein Onboard-Ladegerät integriert sein, welches auch einen Gleichrichter umfasst. Dies ist durch die drei zusätzlichen Eingänge ACE1, ACE2 und ACE3 angedeutet, welche Drehstromeingänge beziehungsweise Wechselstromeingänge repräsentieren. Der erste Eingang DCE1 des Gleichspannungswandlers DC ist mit dem ersten Eingang E1 der Ladeschaltung 400 elektrisch leitend verbunden. Der zweite Eingang DCE2 des Gleichspannungswandlers DC ist mit dem zweiten Eingang E2 der Ladeschaltung 400 elektrisch leitend verbunden. Der erste Ausgang DCA1 des Gleichspannungswandlers DC ist mit dem ersten Ausgang A1 der Ladeschaltung 400 elektrisch leitend verbunden. Der zweite Ausgang DCA2 des Gleichspannungswandlers DC ist mit dem zweiten Ausgang A2 der Ladeschaltung 400 verbunden. Im Ladebetrieb kann der Gleichspannungswandler DC somit die zwischen den Eingängen E1 und E2 anliegende Spannung auf eine für die vorgenannten elektrischen Komponenten geeignete Spannung wandeln und diese somit auch bei geöffneten Schaltern S11, S21, S12, S22 mit elektrischer Energie versorgen. Dies bedingt, dass die elektrischen Energiespeichereinheiten R1 und R2 in gleichem Maße geladen werden. Eventuelle Ausgleichsvorgänge sind somit nicht unbedingt notwendig. Sollte es dennoch aufgrund von Kapazitätsabweichungen innerhalb der elektrischen Energiespeichereinheiten R1 und R2 zu Abweichungen beim Ladezustand kommen, kann der Ladezustandsunterschied beispielsweise während des Ladevorgangs ausgeglichen werden kann, indem beispielsweise durch Schließen des ersten ersten Schalters S11 und des ersten zweiten Schalters S21 die elektrische Energiespeichereinheit R1 mit den Ausgängen DCA1, DCA2 des Gleichspannungswandlers DC verbunden wird und je nach Verbrauch der elektrischen Komponenten 102 bis 107 und der Regelung des Gleichspannungswandlers DC die elektrische Energiespeichereinheit R1 zusätzlich geladen oder entladen wird. Somit können Ausgleichsvorgänge während der Wiederherstellung der Parallelschaltung verhindert werden.

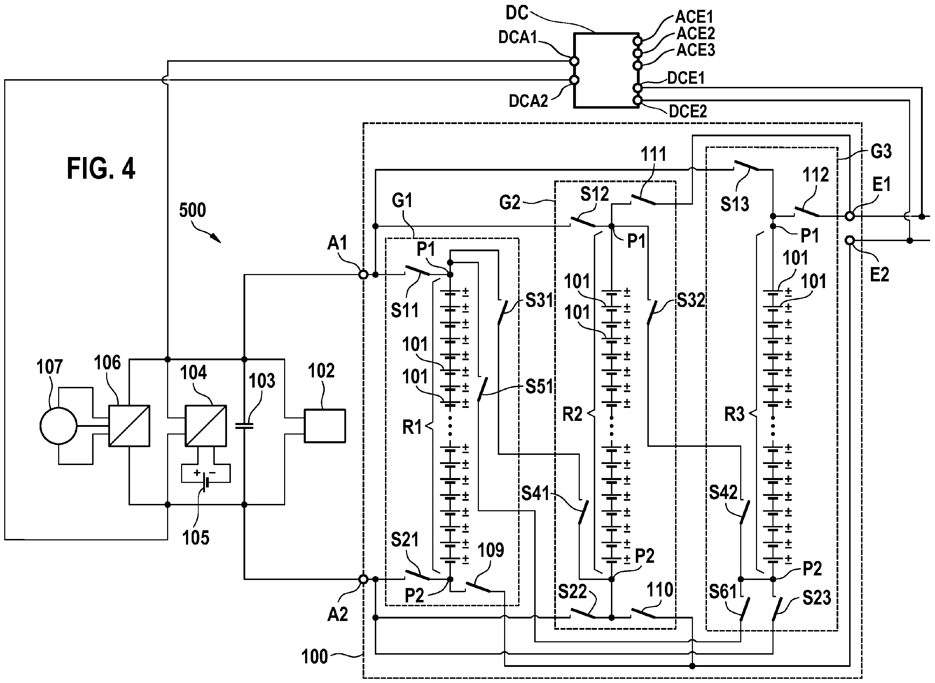

Figur 4 zeigt eine erfindungsgemäße Ladeschaltung 500 für ein Fahrzeug mit drei elektrischen Energiespeichereinheiten R1, R2 und R3 gemäß einer fünften Ausführungsform. Zusätzlich zu den dritten Schaltern S31 und S32 sowie den vierten Schaltern S41 und S42 verfügt die Ladeschaltung über einen fünften Schalter S51 und einen sechsten Schalter S61, die es erlauben, die erste elektrische Energiespeichereinheit R1 mit der dritten elektrischen Energiespeichereinheit R3 in Reihe zu schalten, sodass es möglich ist, zwei beliebige elektrische Energiespeichereinheiten in Reihe zu schalten. Schalter 109, 110, 111 und 112 dienen insbesondere dazu, unzulässig hohe Spannungen an den elektrischen Energiespeichereinheiten R1, R2 und R3 im Ladebetrieb zu verhindern beziehungsweise für die allpolige Trennung vom Potential der elektrischen Energiespeichereinheiten zu sorgen, insbesondere für außen gelegene Anschlüsse an den Gehäusen G1, G2 und G3. Die möglichen Schalterstellungen im Ladebetrieb ergeben sich für eine Reihenschaltung zweier beliebiger Energiespeichereinheiten somit wie folgt:

| | S11 | S12 | S21 | S22 | S31 | S41 | S51 | S61 | S13 | S23 | S32 | S42 | 109 | 110 | 111 | 112 |
|---|---|---|---|---|---|---|---|---|---|---|---|---|---|---|---|---|
| R1 + R2 | x/○ | ○/x | x/○ | ○/x | x | x | ○ | ○ | x/○ | x/○ | ○ | ○ | x | ○ | x | ○ |
| R1 + R3 | x/○ | x/○ | x/○ | x/○ | ○ | ○ | x | x | ○/x | ○/x | ○ | ○ | x | ○ | ○ | x |
| R2 + R3 | x/○ | x/○ | x/○ | x/○ | ○ | ○ | ○ | ○ | ○/x | ○/x | x | x | ○ | x | ○ | x |

Hierbei bezeichnet "x" eine geschlossene Schalterstellung und "o" eine geöffnete Schalterstellung. "x / o" zeigt hierbei an, dass sowohl eine geschlossene als auch eine geöffnete Schalterstellung möglich ist. Beispielsweise kann im Ladebetrieb bei der Reihenschaltung der elektrischen Energiespeichereinheiten R1 und R2 eine über den ersten Ausgang A1 und den zweiten Ausgang A2 angeschlossene elektrische Komponente sowohl über die erste elektrische Energiespeichereinheit R1 als auch die zweite elektrische Energiespeichereinheit R2 als auch die dritte elektrische Energiespeichereinheit R3 mit Energie versorgt werden. Entsprechendes gilt für die weiteren Möglichkeiten der Reihenschaltungen zweier elektrischer Energiespeichereinheiten. Die bevorzugte Art der Energieversorgung von angeschlossenen elektrischen Komponenten im Ladebetrieb ist aber durch den beispielsweise in ein Onboard-Ladegerät integrierten Gleichspannungswandler DC, der die dafür benötigte elektrische Energie direkt aus einer an die Eingänge E1 und E2 angeschlossenen elektrischen Energiequelle bezieht. Ist dies der Fall, können im Ladebetrieb die Schalter S11, S21, S12, S22, S13 und S23 in geöffneter Stellung verbleiben, da die elektrischen Komponenten 102 bis 107 durch den Gleichspannungswandler DC versorgt werden.

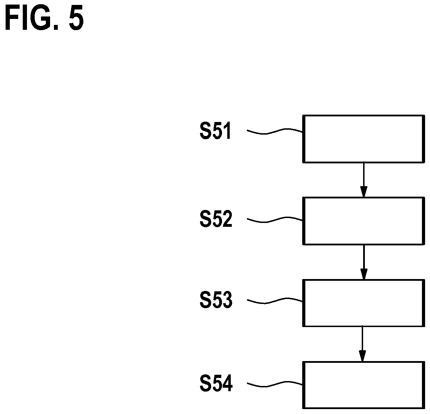

Figur 5 zeigt ein Flussdiagramm des offenbarten Verfahrens gemäß einer ersten Ausführungsform für ein elektrisches Energiespeichersystem mit zwei elektrischen Energiespeichereinheiten R1 und R2, wie es beispielsweise in Figur 1 dargestellt ist. Die Ausgangsstellung aller Schalter für die nachfolgende exemplarische Beschreibung ist dabei, dass alle Schalter geöffnet sind. In einem ersten Schritt S51 werden die zwei elektrischen Energiespeichereinheiten ausgewählt und positiv entschieden, dass an den ersten Ausgang A1 und den zweiten Ausgang A2 angeschlossene elektrische Komponenten, beispielsweise ein Klimakompressor, während des Ladens durch den Gleichspannungswandler DC mit elektrischer Energie versorgt werden. In einem zweiten Schritt S52 wird der erste Schalter S11 und der zweite Schalter S21 der zu ladenden elektrischen Energiespeichereinheiten R1 und R2 geöffnet, wenn sie nicht bereits in dieser Stellung sind. In einem dritten Schritt S53 wird der Schalter S31, der die elektrischen Energiespeichereinheiten R1 und R 2 in Reihe verbinden, geschlossen. In einem vierten Schritt S54 werden die beiden Schalter 108 geschlossen und die elektrisch Energiezufuhr mittels einer an den ersten Eingang E1 und den zweiten Eingang E2 angeschlossenen Energiequelle gestartet, wobei die an den ersten Ausgang A1 und den zweiten Ausgang A2 angeschlossenen elektrischen Komponenten durch den Gleichspannungswandler DC mit elektrischer Energie versorgt werden.

## Patentansprüche

1. Ladeschaltung (200, 300, 400, 500) für ein elektrisches Energiespeichersystem (100) mit n elektrischen Energiespeichereinheiten (R1, R2, R3) mit jeweils einem ersten Pol und einem zweiten Pol, wobei n > 1 gilt, umfassend
- mindestens einen ersten Eingang (E1) und einen zweiten Eingang (E2) zur elektrischen Verbindung mit einer Energiequelle,
- mindestens einen ersten Ausgang (A1) und einen zweiten Ausgang (A2) zur elektrischen Verbindung mit einer elektrischen Komponente,
- mindestens n erste Polanschlüsse (P1) und n zweite Polanschlüsse (P2), wobei ein i-ter erster Polanschluss (P1) mit dem ersten Pol der i-ten elektrischen Energiespeichereinheit (R1, R2, R3) und ein i-ter zweiter Polanschluss (P2) mit dem zweiten Pol der i-ten elektrischen Energiespeichereinheit (R1, R2, R3) elektrisch leitend verbindbar sind,
- mindestens n erste Schalter (S11, S12, S13), wobei ein erster Anschluss des i-ten ersten Schalters (S11, S12, S13) mit dem i-ten ersten Polanschluss (P1) der i-ten elektrischen Energiespeichereinheit (R1, R2, R3) elektrisch leitend verbunden ist,
- mindestens n zweite Schalter (S21, S22, S23), wobei ein erster Anschluss des i-ten zweiten Schalters (S21, S22, S23) mit dem i-ten zweiten Polanschluss der i-ten elektrischen Energiespeichereinheit (R1, R2, R3) elektrisch leitend verbunden ist,
- mindestens n-1 dritte Schalter (S31, S32), wobei ein erster Anschluss des k-ten dritten Schalters (S31, S32) mit dem ersten Polanschluss der k-ten elektrischen Energiespeichereinheit (R1, R2, R3) und ein zweiter Anschluss des k-ten dritten Schalters (S31, S32) mit dem zweiten Polanschluss der k+1-ten elektrischen Energiespeichereinheit (R1, R2, R3) elektrisch leitend verbunden sind, wobei n > 1 und i <=n, k < n natürliche Zahlen sind,
- mindestens einen Gleichspannungswandler (DC),
**dadurch gekennzeichnet,**
**dass** der erste Ausgang (A1) mit dem zweiten Anschluss des ersten Schalters (S11) elektrisch leitend verbunden ist, der zweite Ausgang (A2) mit dem zweiten Anschluss des ersten zweiten Schalters (S21) elektrisch leitend verbunden ist, der erste Eingang (E1) mit dem ersten Anschluss des n-ten ersten Schalters (S12, S13) elektrisch leitend verbunden ist, der zweite Eingang (E2) mit dem ersten Anschluss des ersten zweiten Schalters (S21) elektrisch leitend verbunden ist und die ersten Schalter (S11, S12, S13), die zweiten Schalter (S21, S22, S23) und die dritten Schalter (S31, S32) derart geschaltet sind, dass im Ladebetrieb mittels einer an den ersten Eingang (E1) und den zweiten Eingang (E2) angeschlossenen Energiequelle ein mindestens doppelt so hohes Spannungsniveau zwischen dem ersten Eingang (E1) und dem zweiten Eingang (E2) anliegt im Vergleich mit einem Spannungsniveau zwischen dem ersten Ausgang (A1) und dem zweiten Ausgang (A2), und wobei ein erster elektrischer Eingang (DCE1) des Gleichspannungswandlers (DC) mit dem ersten Eingang (E1) der Ladeschaltung elektrisch leitend verbunden ist, ein zweiter elektrischer Eingang (DCE2) des Gleichspannungswandlers (DC) mit dem zweiten Eingang (E2) der Ladeschaltung elektrisch leitend verbunden ist, ein erster elektrischer Ausgang (DCA1) des Gleichspannungswandlers (DC) mit dem ersten Ausgang (A1) der Ladeschaltung (200, 300, 400, 500) elektrisch leitend verbunden ist und ein zweiter elektrischer Ausgang (DCA2) des Gleichspannungswandlers (DC) mit dem zweiten Ausgang (A2) der Ladeschaltung (200, 300, 400, 500) elektrisch leitend verbunden ist.

2. Ladeschaltung gemäß Anspruch 1, wobei bei geöffnetem ersten ersten Schalter (S11) und/oder geöffnetem ersten zweiten Schalter (S21) der erste elektrische Ausgang (DCA1) des Gleichspannungswandlers (DC) mit dem ersten Ausgang (A1) der Ladeschaltung (200, 300, 400, 500) elektrisch leitend verbunden ist und der zweite elektrische Ausgang (DCA2) des Gleichspannungswandlers (DC) mit dem zweiten Ausgang (A2) der Ladeschaltung (200, 300, 400, 500) elektrisch leitend verbunden ist.

3. Ladeschaltung (200, 300, 400, 500) gemäß Anspruch 1, wobei das Spannungsniveau zwischen dem ersten elektrischen Ausgang (DCA1) des Gleichspannungswandlers (DC) und dem zweiten elektrischen Ausgang (DCA2) des Gleichspannungswandlers (DC) im Wesentlichen dem Spannungsniveau zwischen dem ersten Ausgang (A1) der Ladeschaltung (200, 300, 400, 500) und dem zweiten Ausgang (A2) der Ladeschaltung (200, 300, 400, 500) gleicht und das Spannungsniveau zwischen dem ersten elektrischen Eingang (DCE1) des Gleichspannungswandlers (DC) und dem zweiten elektrischen Eingang (DCE2) des Gleichspannungswandlers (DC) im Wesentlichen dem Spannungsniveau zwischen dem ersten Eingang (E1) der Ladeschaltung (200, 300, 400, 500) und dem zweiten Eingang (E2) der Ladeschaltung (200, 300, 400, 500) gleicht.

4. Ladeschaltung (200, 300, 400, 500) gemäß Anspruch 1, **dadurch gekennzeichnet, dass** der zweite Anschluss des i-ten zweiten Schalters (S21, S22, S23) mit dem zweiten Ausgang (A2) elektrisch leitend verbunden ist und der zweite Anschluss des i-ten ersten Schalters (S11, S12, S13) mit dem ersten Ausgang (A1) elektrisch leitend verbunden ist.

5. Ladeschaltung (200, 300, 400, 500) gemäß einem der vorhergehenden Ansprüche, **dadurch gekennzeichnet, dass** die Ladeschaltung (200, 300, 400, 500) mindestens n-1 vierte Schalter (S41, S42) umfasst und in die elektrische Verbindung zwischen dem zweiten Anschluss des k-ten dritten Schalters (S31, S32) mit dem zweiten Polanschluss (P2) der k+1-ten elektrischen Energiespeichereinheit (R2, R3) der k-te vierte Schalter (S41, S42) eingefügt ist, wobei der zweite Anschluss des k-ten dritten Schalters (S31, S32) mit einem ersten Anschluss des k-ten vierten Schalters (S41, S42) elektrisch leitend verbunden ist und ein zweiter Anschluss des k-ten vierten Schalters mit dem zweiten Polanschluss (P2) der k+1-ten elektrischen Energiespeichereinheit (R2, R3) elektrisch leitend verbunden ist.

6. Ladeschaltung (200, 300, 400, 500) gemäß einem der vorhergehenden Ansprüche, **dadurch gekennzeichnet, dass** die Ladeschaltung (200, 300, 400, 500) für jede zweielementige Teilmenge der n-elementigen Menge der elektrischen Energiespeichereinheiten (R1, R2, R3), die nicht aus benachbarten Elementen besteht, mindestens einen fünften Schalter (S51) und mindestens einen sechsten Schalter (S61) umfasst, wobei ein erster Anschluss des jeweiligen fünften Schalters (S51) mit dem ersten Polanschluss (P1) der jeweiligen ersten elektrischen Energiespeichereinheit (R1) und ein zweiter Anschluss des jeweiligen fünften Schalters (S51) mit einem ersten Anschluss des jeweiligen sechsten Schalters (S61) elektrisch leitend verbunden sind und wobei ein zweiter Anschluss des jeweiligen sechsten Schalters (S61) mit dem zweiten Polanschluss (P2) der jeweiligen zweiten elektrischen Energiespeichereinheit (R3) elektrisch leitend verbunden ist.

7. Ladeschaltung (200, 300, 400, 500) gemäß einem der vorhergehenden Ansprüche, **dadurch gekennzeichnet, dass** ein induktives Bauteil (201) mit mindestens einem ersten Schalter (S11, S12, S13) und/oder mindestens einem zweiten Schalter (S21, S22, S23) elektrisch leitend in Reihe verbunden ist.

8. Ladeverfahren zum Ladebetrieb eines elektrischen Energiespeichersystems (100) mit n elektrischen Energiespeichereinheiten (R1, R2, R3), wobei n > 1 gilt, und mit mindestens einer Ladeschaltung (200, 300, 400, 500) gemäß einem der Ansprüche 1 bis 7, umfassend folgende Schritte:
a) Auswählen von mindestens zwei der n elektrischen Energiespeichereinheiten (R1, R2, R3), welche im Ladebetrieb mittels einer an den ersten Eingang (E1) und den zweiten Eingang (E2) angeschlossenen Energiequelle geladen werden sollen und Entscheiden, ob eine an den ersten Ausgang (A1) und den zweiten Ausgang (A2) angeschlossene elektrische Komponente während des Ladens mit elektrischer Energie durch den Gleichspannungswandler (DC) versorgt werden soll,
b) Öffnen der ersten Schalter (S11, S12, S13) und der zweiten Schalter (S21, S22, S23) der zu ladenden elektrischen Energiespeichereinheiten (R1, R2, R3),
c) Schließen derjenigen dritten Schalter (S31, S32), die die zu ladenden elektrischen Energiespeichereinheiten in Reihe verbinden,
d) Starten der Energiezufuhr mittels einer an den ersten Eingang (E1) und den zweiten Eingang (E2) angeschlossenen Energiequelle, wobei in Abhängigkeit der Entscheidung in a) die an den ersten Ausgang (A1) und den zweiten Ausgang (A2) angeschlossene elektrische Komponente durch den Gleichspannungswandler (DC) mit elektrischer Energie versorgt wird.

9. Elektrisches Energiespeichersystem (100) mit mindestens zwei elektrischen Energiespeichereinheiten (R1, R2, R3), **dadurch gekennzeichnet, dass** das elektrische Energiespeichersystem (100) eine Ladeschaltung (200, 300, 400, 500) gemäß einem der Ansprüche 1 bis 7 umfasst.

10. Verwendung einer Ladeschaltung (200, 300, 400, 500) gemäß einem der Ansprüche 1 bis 7 in elektrisch angetriebenen Fahrzeugen einschließlich Hybridfahrzeugen, in stationären elektrischen Energiespeicheranlagen sowie in elektrisch betriebenen Handwerkzeugen.

## Claims

1. Charging circuit (200, 300, 400, 500) for an electrical energy storage system (100) having n electrical energy storage units (R1, R2, R3) each having a first pole and a second pole, wherein n > 1, comprising
- at least one first input (E1) and one second input (E2) for electrical connection to an energy source,
- at least one first output (A1) and one second output (A2) for electrical connection to an electrical component,
- at least n first pole connections (P1) and n second pole connections (P2), wherein an i-th first pole connection (P1) is able to be electrically conductively connected to the first pole of the i-th electrical energy storage unit (R1, R2, R3) and an i-th second pole connection (P2) is able to be electrically conductively connected to the second pole of the i-th electrical energy storage unit (R1, R2, R3),
- at least n first switches (S11, S12, S13), wherein a first connection of the i-th first switch (S11, S12, S13) is electrically conductively connected to the i-th first pole connection (P1) of the i-th electrical energy storage unit (R1, R2, R3),
- at least n second switches (S21, S22, S23), wherein a first connection of the i-th second switch (S21, S22, S23) is electrically conductively connected to the i-th second pole connection of the i-th electrical energy storage unit (R1, R2, R3),
- at least n-1 third switches (S31, S32), wherein a first connection of the k-th third switch (S31, S32) is electrically conductively connected to the first pole connection of the k-th electrical energy storage unit (R1, R2, R3) and a second connection of the k-th third switch (S31, S32) is electrically conductively connected to the second pole connection of the k+1-th electrical energy storage unit (R1, R2, R3), wherein n > 1 and i ≤ n, k < n are natural numbers,
- at least one DC voltage converter (DC),
**characterized in that**
the first output (A1) is electrically conductively connected to the second connection of the first switch (S11), the second output (A2) is electrically conductively connected to the second connection of the first second switch (S21), the first input (E1) is electrically conductively connected to the first connection of the n-th first switch (S12, S13), the second input (E2) is electrically conductively connected to the first connection of the first second switch (S21) and the first switches (S11, S12, S13), the second switches (S21, S22, S23) and the third switches (S31, S32) are connected in such a way that during the charging operation by means of an energy source connected to the first input (E1) and the second input (E2) an at least twice as high voltage level is applied between the first input (E1) and the second input (E2) compared to a voltage level between the first output (A1) and the second output (A2), and wherein a first electrical input (DCE1) of the DC voltage converter (DC) is electrically conductively connected to the first input (E1) of the charging circuit, a second electrical input (DCE2) of the DC voltage converter (DC) is electrically conductively connected to the second input (E2) of the charging circuit, a first electrical output (DCA1) of the DC voltage converter (DC) is electrically conductively connected to the first output (A1) of the charging circuit (200, 300, 400, 500) and a second electrical output (DCA2) of the DC voltage converter (DC) is electrically conductively connected to the second output (A2) of the charging circuit (200, 300, 400, 500).

2. Charging circuit according to Claim 1, wherein, when the first first switch (S11) is open and/or when the first second switch (S21) is open, the first electrical output (DCA1) of the DC voltage converter (DC) is electrically conductively connected to the first output (A1) of the charging circuit (200, 300, 400, 500) and the second electrical output (DCA2) of the DC voltage converter (DC) is electrically conductively connected to the second output (A2) of the charging circuit (200, 300, 400, 500).

3. Charging circuit (200, 300, 400, 500) according to Claim 1, wherein the voltage level between the first electrical output (DCA1) of the DC voltage converter (DC) and the second electrical output (DCA2) of the DC voltage converter (DC) is substantially equal to the voltage level between the first output (A1) of the charging circuit (200, 300, 400, 500) and the second output (A2) of the charging circuit (200, 300, 400, 500) and the voltage level between the first electrical input (DCE1) of the DC voltage converter (DC) and the second electrical input (DCE2) of the DC voltage converter (DC) is substantially equal to the voltage level between the first input (E1) of the charging circuit (200, 300, 400, 500) and the second input (E2) of the charging circuit (200, 300, 400, 500).

4. Charging circuit (200, 300, 400, 500) according to Claim 1, **characterized in that** the second connection of the i-th second switch (S21, S22, S23) is electrically conductively connected to the second output (A2) and the second connection of the i-th first switch (S11, S12, S13) is electrically conductively connected to the first output (A1).

5. Charging circuit (200, 300, 400, 500) according to one of the preceding claims, **characterized in that** the charging circuit (200, 300, 400, 500) comprises at least n-1 fourth switches (S41, S42) and the k-th fourth switch (S41, S42) is inserted into the electrical connection between the second connection of the k-th third switch (S31, S32) with the second pole connection (P2) of the k+1-th electrical energy storage unit (R2, R3), wherein the second connection of the k-th third switch (S31, S32) is electrically conductively connected to a first connection of the k-th fourth switch (S41, S42) and a second connection of the k-th fourth switch is electrically conductively connected to the second pole connection (P2) of the k+1-th electrical energy storage unit (R2, R3).

6. Charging circuit (200, 300, 400, 500) according to one of the preceding claims, **characterized in that** the charging circuit (200, 300, 400, 500) comprises at least one fifth switch (S51) and at least one sixth switch (S61) for each two-element subset of the n-element set of electrical energy storage units (R1, R2, R3) that does not consist of adjacent elements, wherein a first connection of the respective fifth switch (S51) is electrically conductively connected to the first pole connection (P1) of the respective first electrical energy storage unit (R1) and a second connection of the respective fifth switch (S51) is electrically conductively connected to a first connection of the respective sixth switch (S61) and wherein a second connection of the respective sixth switch (S61) is electrically conductively connected to the second pole connection (P2) of the respective second electrical energy storage unit (R3).

7. Charging circuit (200, 300, 400, 500) according to one of the preceding claims, **characterized in that** an inductive component part (201) is electrically conductively connected in series with at least one first switch (S11, S12, S13) and/or at least one second switch (S21, S22, S23).

8. Charging method for the charging operation of an electrical energy storage system (100) having n electrical energy storage units (R1, R2, R3), wherein n > 1, and having at least one charging circuit (200, 300, 400, 500) according to one of Claims 1 to 7, comprising the following steps:
a) selecting at least two of the n electrical energy storage units (R1, R2, R3) that are intended to be charged during the charging operation by means of an energy source connected to the first input (E1) and the second input (E2) and deciding whether an electrical component connected to the first output (A1) and the second output (A2) is intended to be supplied with electrical energy by way of the DC voltage converter (DC) during the charging,
b) opening the first switches (S11, S12, S13) and the second switches (S21, S22, S23) of the electrical energy storage units (R1, R2, R3) to be charged,
c) closing those third switches (S31, S32) that connect the electrical energy storage units to be charged in series,
d) starting the energy feed by means of an energy source connected to the first input (E1) and the second input (E2), wherein, depending on the decision in a), the electrical component connected to the first output (A1) and the second output (A2) is supplied with electrical energy by way of the DC voltage converter (DC).

9. Electrical energy storage system (100) having at least two electrical energy storage units (R1, R2, R3), **characterized in that** the electrical energy storage system (100) comprises a charging circuit (200, 300, 400, 500) according to one of Claims 1 to 7.

10. Use of a charging circuit (200, 300, 400, 500) according to one of Claims 1 to 7 in electrically driven vehicles including hybrid vehicles, in stationary electrical energy storage installations and in electrically operated hand tools.

## Revendications

1. Circuit de charge (200, 300, 400, 500) destiné à un système d'accumulation d'énergie électrique (100) comportant n unités d'accumulation d'énergie électrique (R1, R2, R3) possédant chacune un premier pôle et un deuxième pôle, où n > 1, comprenant
- au moins une première entrée (E1) et une deuxième entrée (E2) destinées à être reliées électriquement à une source d'énergie,
- au moins une première sortie (A1) et une deuxième sortie (A2) destinées à être reliées électriquement à un composant électrique,
- au moins n premières bornes polaires (P1) et n deuxièmes bornes polaires (P2), une i-ème première borne polaire (P1) pouvant être reliée de manière électriquement conductrice au premier pôle de la i-ème unité d'accumulation d'énergie électrique (R1, R2, R3) et une i-ème deuxième borne polaire (P2) pouvant être reliée de manière électriquement conductrice au deuxième pôle de la i-ème unité d'accumulation d'énergie électrique (R1, R2, R3),
- au moins n premiers commutateurs (S11, S12, S13), une première borne du premier commutateur (S11, S12, S13) étant reliée de manière électriquement conductrice à la première borne polaire (P1) de la i-ème unité d'accumulation d'énergie électrique (R1, R2, R3),
- au moins n deuxièmes commutateurs (S21, S22, S23), une première borne du i-ème commutateur (S21, S22, S23) étant reliée de manière électriquement conductrice à la i-ème deuxième borne polaire de la i-ème unité d'accumulation d'énergie électrique (R1, R2, R3),
- au moins n-1 troisièmes commutateurs (S31, S32), une première borne du k-ième commutateur (S31, S32) étant reliée de manière électriquement conductrice à la première borne polaire de la k-ième unité d'accumulation d'énergie électrique (R1, R2, R3) et une deuxième borne du k-ième commutateur (S31, S32) étant reliée de manière électriquement conductrice à la deuxième borne polaire de la k+1-ième unité d'accumulation d'énergie électrique (R1, R2, R3), où n > 1 et i <=n, k < n sont des nombres naturels,
- au moins un convertisseur de tension continue (DC),
**caractérisé en ce que** la première sortie (A1) est reliée de manière électriquement conductrice à la deuxième borne du premier commutateur (S11), la deuxième sortie (A2) est reliée de manière électriquement conductrice à la deuxième borne du premier deuxième commutateur (S21), la première entrée (E1) est reliée de manière électriquement conductrice à la première borne du n-ième premier commutateur (S12, S13), la deuxième entrée (E2) est reliée de manière électriquement conductrice à la première borne du premier deuxième commutateur (S21) et les premiers commutateurs (S11, S12, S13), les deuxièmes commutateurs (S21, S22, S23) et les troisièmes commutateurs (S31, S32) sont raccordés de telle manière que, dans le mode de charge au moyen d'une source d'énergie raccordée à la première entrée (E1) et à la deuxième entrée (E2), un niveau de tension au moins deux fois plus élevé entre la première entrée (E1) et la deuxième entrée (E2) est présent par comparaison à un niveau de tension entre la première sortie (A1) et la deuxième sortie (A2), et dans lequel une première entrée électrique (DCE1) du convertisseur de tension continue (DC) est reliée de manière électriquement conductrice à la première entrée (E1) du circuit de charge, une deuxième entrée électrique (DCE2) du convertisseur de tension continue (DC) est reliée de manière électriquement conductrice à la deuxième entrée (E2) du circuit de charge, une première sortie électrique (DCA1) du convertisseur de tension continue (DC) est reliée de manière électriquement conductrice à la première sortie (A1) du circuit de charge (200, 300, 400, 500) et une deuxième sortie électrique (DCA2) du convertisseur de tension continue (DC) est reliée de manière électriquement conductrice à la deuxième sortie (A2) du circuit de charge (200, 300, 400, 500).

2. Circuit de charge selon la revendication 1, dans lequel, lorsque le premier premier commutateur (S11) est ouvert et/ou le premier deuxième commutateur (S21) est ouvert, la première sortie électrique (DCA1) du convertisseur de tension continue (DC) est reliée de manière électriquement conductrice à la première sortie (A1) du circuit de charge (200, 300, 400, 500) et la deuxième sortie électrique (DCA2) du convertisseur de tension continue (DC) est reliée de manière électriquement conductrice à la deuxième sortie (A2) du circuit de charge (200, 300, 400, 500).

3. Circuit de charge (200, 300, 400, 500) selon la revendication 1, dans lequel le niveau de tension entre la première sortie électrique (DCA1) du convertisseur de tension continue (DC) et la deuxième sortie électrique (DCA2) du convertisseur de tension continue (DC) est sensiblement égal au niveau de tension entre la première sortie (A1) du circuit de charge (200, 300, 400, 500) et la deuxième sortie (A2) du circuit de charge (200, 300, 400, 500) et le niveau de tension entre la première entrée électrique (DCE1) du convertisseur de tension continue (DC) et la deuxième entrée électrique (DCE2) du convertisseur de tension continue (DC) est sensiblement égal au niveau de tension entre la première entrée (E1) du circuit de charge (200, 300, 400, 500) et la deuxième entrée (E2) du circuit de charge (200, 300, 400, 500).

4. Circuit de charge (200, 300, 400, 500) selon la revendication 1, **caractérisé en ce que** la deuxième borne du i-ème deuxième commutateur (S21, S22, S23) est reliée de manière électriquement conductrice à la deuxième sortie (A2) et la deuxième borne du i-ème premier commutateur (S11, S12, S13) est reliée de manière électriquement conductrice à la première sortie (A1).

5. Circuit de charge (200, 300, 400, 500) selon l'une des revendications précédentes, **caractérisé en ce que** le circuit de charge (200, 300, 400, 500) comprend au moins n-1 quatrièmes commutateurs (S41, S42) et le k-ième commutateur (S41, S42) est inséré dans la liaison électrique entre la deuxième borne du k-ième troisième commutateur (S31, S32) et la deuxième borne (P2) de la k+1-ième unité d'accumulation d'énergie électrique (R2, R3), dans lequel la deuxième borne du k-ième troisième commutateur (S31, S32) est reliée de manière électriquement conductrice à une première borne du k-ième quatrième commutateur (S41, S42) et une deuxième borne du k-ième quatrième commutateur est reliée de manière électriquement conductrice à la deuxième borne polaire (P2) de la k+1-ième unité d'accumulation d'énergie électrique (R2, R3).

6. Circuit de charge (200, 300, 400, 500) selon l'une des revendications précédentes, **caractérisé en ce que**, pour chaque sous-ensemble à deux éléments de l'ensemble à n éléments des unités d'accumulation d'énergie électrique (R1, R2, R3) qui ne sont pas constituées d'éléments voisins, le circuit de charge (200, 300, 400, 500) comprend au moins un cinquième commutateur (S51) et au moins un sixième commutateur (S61), dans lequel une première borne du cinquième commutateur (S51) respectif est reliée de manière électriquement conductrice à la première borne polaire (P1) de la première unité d'accumulation d'énergie électrique (R1) respective et une deuxième borne du cinquième commutateur (S51) respectif est reliée de manière électriquement conductrice à une première borne du sixième commutateur (S61) respectif et dans lequel une deuxième borne du sixième commutateur (S61) respectif est reliée de manière électriquement conductrice à la deuxième borne polaire (P2) de la deuxième unité d'accumulation d'énergie électrique (R3) respective.

7. Circuit de charge (200, 300, 400, 500) selon l'une des revendications précédentes, **caractérisé en ce qu'**un composant inductif (201) est relié de manière électriquement conductrice en série à au moins un premier commutateur (S11, S12, S13) et/ou au moins un deuxième commutateur (S21, S22, S23).

8. Procédé de charge pour le mode de charge d'un système d'accumulation d'énergie électrique (100) comportant n unités d'accumulation d'énergie électrique (R1, R2, R3), où n > 1, et comportant au moins un circuit de charge (200, 300, 400, 500) selon l'une des revendications 1 à 7, comprenant les étapes suivantes :
a) la sélection d'au moins deux des n unités d'accumulation d'énergie électrique (R1, R2, R3) qui doivent être chargées dans le mode de charge au moyen d'une source d'énergie raccordée à la première entrée (E1) et à la deuxième entrée (E2) et décider si un composant électrique raccordé à la première sortie (A1) et à la deuxième sortie (A2) doit être alimenté en énergie électrique par le convertisseur de tension continue (DC) pendant la charge,
b) l'ouverture des premiers commutateurs (S11, S12, S13) et des deuxièmes commutateurs (S21, S22, S23) des unités d'accumulation d'énergie électrique (R1, R2, R3) à charger,
c) la fermeture des troisièmes commutateurs (S31, S32) qui relient en série les unités d'accumulation d'énergie électrique à charger,
d) le démarrage de l'alimentation en énergie au moyen d'une source d'énergie raccordée à la première entrée (E1) et à la deuxième entrée (E2), le composant électrique raccordé à la première sortie (A1) et à la deuxième sortie (A2) étant alimenté en énergie électrique par le convertisseur de tension continue (DC) en fonction de la décision prise en a).

9. Système d'accumulation d'énergie électrique (100) comportant au moins deux unités d'accumulation d'énergie électrique (R1, R2, R3), **caractérisé en ce que** le système d'accumulation d'énergie électrique (100) comprend un circuit de charge (200, 300, 400, 500) selon l'une des revendications 1 à 7.

10. Utilisation d'un circuit de charge (200, 300, 400, 500) selon l'une des revendications 1 à 7 dans des véhicules propulsés électriquement, y compris des véhicules hybrides, dans des installations fixes d'accumulation d'énergie électrique et dans des outils à main entraînés électriquement.
